# EUROPEAN PATENT APPLICATION

(11) **EP 4 765 599 A1**
(43) Date of publication of application: **24.06.2026**
(21) Application number: 25214432.4
(22) Date of filing: 07.11.2025
(51) Int. Cl.: H02M 1/00, H02M 3/335

(54) **SYSTEMS AND METHODS FOR TWO-STEP SYNCHRONOUS RECTIFICATION FOR POWER CONVERTER**

(30) Priority: 19.12.2024 US 202418987172
(71) Applicant: Borgwarner Inc., Auburn Hills, Michigan 48326 (US)
(72) Inventor: REIS, Alexandre M.S., Westfield, IN (US); SREEDHAR, Sunil, Westfield, IN (US); SEN, Sudipta, Hillsboro, OR (US)
(74) Representative: Office Freylinger

(57) **Abstract**

A DC-DC converter includes a first switch, and a first diode in parallel with the first switch, a second switch, and a second diode in parallel with the second switch, a third switch, and a third diode in parallel with the third switch, a fourth switch, and a fourth diode in parallel with the fourth switch, and one or more controllers configured to operate in a first period to turn on the first switch and hold the fourth switch to remain turned off, and to turn on the third switch and hold the second switch to remain turned off during one or more of a synchronous rectification of the DC-DC converter, a discontinuous conduction or light load of the DC-DC converter, or a freewheeling of the DC-DC converter.

## Description

### TECHNICAL FIELD

Various embodiments of the present disclosure relate generally to a power converter, and, more particularly, to two step synchronous rectification for a DC-DC converter.

### BACKGROUND

Electric vehicles, for example, may include a power converter, such as a charger to charge a battery of the electric vehicle. Electric vehicles may include an inverter to convert power from the battery to power for a system, such as a power outlet, of the vehicle. The charger and the inverter may not be operated simultaneously. Electric vehicles may include a DC-DC converter for rectification. DC-DC converters may experience loss of efficiency during rectification. DC-DC converters may experience current transients and oscillations during freewheeling mode during operation.

The present disclosure is directed to overcoming one or more of these above-referenced challenges.

### SUMMARY OF THE DISCLOSURE

In some aspects, the techniques described herein relate to a DC-DC converter including: a first switch, and a first diode in parallel with the first switch; a second switch, and a second diode in parallel with the second switch; a third switch, and a third diode in parallel with the third switch; a fourth switch, and a fourth diode in parallel with the fourth switch; and one or more controllers configured to operate in a first period to turn on the first switch and hold the fourth switch to remain turned off, and to turn on the third switch and hold the second switch to remain turned off during one or more of a synchronous rectification of the DC-DC converter, a discontinuous conduction or light load of the DC-DC converter, or a freewheeling of the DC-DC converter.

In some aspects, the techniques described herein relate to a DC-DC converter, wherein the one or more controllers are further configured to turn on the second switch and the fourth switch in the first period after a settling time during the synchronous rectification of the DC-DC converter.

In some aspects, the techniques described herein relate to a DC-DC converter, wherein the one or more controllers are configured to operate in the first period to turn on the first switch and hold the fourth switch to remain turned off, and to turn on the third switch and hold the second switch to remain turned off during one or more of the discontinuous conduction or light load of the DC-DC converter or the freewheeling of the DC-DC converter.

In some aspects, the techniques described herein relate to a DC-DC converter, wherein the one or more controllers are further configured to operate in a second period to turn on the fourth switch and hold the first switch to remain turned off, and to turn on the second switch and hold the third switch to remain turned off.

In some aspects, the techniques described herein relate to a DC-DC converter, wherein the first period includes more than one conduction cycle.

In some aspects, the techniques described herein relate to a DC-DC converter, wherein the one or more controllers are further configured to operate in the first period to turn off the first switch and hold the fourth switch to remain turned on, and to turn off the third switch and hold the second switch to remain turned on during a shutdown period for one or more of the synchronous rectification of the DC-DC converter, the discontinuous conduction or light load of the DC-DC converter, or the freewheeling of the DC-DC converter.

In some aspects, the techniques described herein relate to a DC-DC converter, wherein the one or more controllers are further configured to turn off the second switch and the fourth switch in the first period after a settling time.

In some aspects, the techniques described herein relate to a DC-DC converter, wherein the one or more controllers are further configured to operate in the first period to turn off the fourth switch and hold the first switch to remain turned on, and to turn off the second switch and hold the third switch to remain turned on during a shutdown period for one or more of the synchronous rectification of the DC-DC converter, the discontinuous conduction or light load of the DC-DC converter, or the freewheeling of the DC-DC converter.

In some aspects, the techniques described herein relate to a DC-DC converter, wherein a resistance of the first diode is higher than an on-state resistance of the first switch.

In some aspects, the techniques described herein relate to a DC-DC converter, further including: an inverter including the DC-DC converter, the inverter configured to convert DC power from a battery to AC power to drive a motor, the battery configured to supply the DC power to the inverter; and the motor configured to receive the AC power from the inverter to drive the motor, wherein the inverter, the battery, and the motor are provided as a vehicle.

In some aspects, the techniques described herein relate to a system including one or more controllers configured to operate in a first period to turn on a first switch of a full bridge DC-DC converter and hold a fourth switch of the full bridge DC-DC converter to remain turned off, and to turn on a third switch of the full bridge DC-DC converter and hold a second switch of the full bridge DC-DC converter to remain turned off.

In some aspects, the techniques described herein relate to a system, wherein the one or more controllers are further configured to turn on the second switch and the fourth switch in the first period after a settling time during a synchronous rectification of the full bridge DC-DC converter.

In some aspects, the techniques described herein relate to a system, wherein the one or more controllers are further configured to adjust the settling time.

In some aspects, the techniques described herein relate to a system, wherein the one or more controllers are further configured to operate in a second period to turn on the fourth switch and hold the first switch to remain turned off, and to turn on the second switch and hold the third switch to remain turned off.

In some aspects, the techniques described herein relate to a method including: operating a first switch in a full bridge DC-DC converter and a third switch of the full bridge DC-DC converter to turn on at a first time in a first period; and operating a second switch of the full bridge DC-DC converter and a fourth switch of the full bridge DC-DC converter to remain off.

In some aspects, the techniques described herein relate to a method, further including: operating the second switch of the full bridge DC-DC converter and the fourth switch of the full bridge DC-DC converter to turn on at a second time in the first period after the first time in the first period.

In some aspects, the techniques described herein relate to a method, wherein the second time in the first period follows a settling time of a current transient of the full bridge DC-DC converter caused by operating the first switch and the third switch to turn on.

In some aspects, the techniques described herein relate to a method, further including: operating the second switch and the fourth switch to turn on, and the first switch and the third switch to remain off, at a first time in a second period; and operating the first switch and the third switch to turn on at a second time in the second period after the first time in the second period.

In some aspects, the techniques described herein relate to a method, wherein the first period includes more than one conduction cycle.

In some aspects, the techniques described herein relate to a method, wherein the method is performed during one or more of a synchronous rectification of the full bridge DC-DC converter, a discontinuous conduction or light load of the full bridge DC-DC converter, or a freewheeling of the full bridge DC-DC converter.

Additional objects and advantages of the disclosed embodiments will be set forth in part in the description that follows, and in part will be apparent from the description, or may be learned by practice of the disclosed embodiments. The objects and advantages of the disclosed embodiments will be realized and attained by means of the elements and combinations particularly pointed out in the appended claims.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an exemplary system infrastructure for a vehicle including an onboard charger, according to one or more embodiments.
FIG. 2 depicts an exemplary system infrastructure for a battery charger, according to one or more embodiments.
FIG. 3 depicts an implementation of a computer system that may execute techniques presented herein, according to one or more embodiments.
FIG. 4 depicts a first step with an upper switch open in one or more of a two-step synchronous rectification of the DC-DC converter, a discontinuous conduction or light load of the DC-DC converter, or a freewheeling of the DC-DC converter, according to one or more embodiments.
FIG. 5 depicts a first state with a lower switch open in one or more of a two-step synchronous rectification of the DC-DC converter, a discontinuous conduction or light load of the DC-DC converter, or a freewheeling of the DC-DC converter, according to one or more embodiments.
FIG. 6 depicts a plot of a current transient after turning on with single step synchronous rectification, according to one or more embodiments.
FIG. 7 depicts a plot of a current transient after turning on with two step synchronous rectification including step activation, according to one or more embodiments.
FIG. 8 depicts a plot of a current transient after turning off with single step synchronous rectification, according to one or more embodiments.
FIG. 9 depicts a plot of a current transient after turning off with two step synchronous rectification including step activation, according to one or more embodiments.
FIG. 10 depicts a plot of transformer secondary current and voltage oscillation during freewheeling, according to one or more embodiments.
FIG. 11 depicts a plot of transformer secondary current and voltage with step activation and without oscillation during freewheeling, according to one or more embodiments.

### DETAILED DESCRIPTION OF EMBODIMENTS

Both the foregoing general description and the following detailed description are exemplary and explanatory only and are not restrictive of the features, as claimed. As used herein, the terms "comprises," "comprising," "has," "having," "includes," "including," or other variations thereof, are intended to cover a non-exclusive inclusion such that a process, method, article, or apparatus that comprises a list of elements does not include only those elements, but may include other elements not expressly listed or inherent to such a process, method, article, or apparatus. In this disclosure, unless stated otherwise, relative terms, such as, for example, "about," "substantially," and "approximately" are used to indicate a possible variation of ±10% in the stated value. In this disclosure, unless stated otherwise, any numeric value may include a possible variation of ±10% in the stated value.

Various embodiments of the present disclosure relate generally to a power converter, and, more particularly, to two step synchronous rectification for a DC-DC converter. The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. For example, in the context of the disclosure, the switching devices may be described as switches or devices, but may refer to any device for controlling the flow of power in an electrical circuit. For example, switches may be metal-oxide-semiconductor field-effect transistors (MOSFETs), bipolar junction transistors (BJTs), insulated-gate bipolar transistors (IGBTs), or relays, for example, or any combination thereof, but are not limited thereto.

Electric vehicles are becoming more popular with carbon dioxide emission standards becoming more strict and electric range increasing to over 300 miles per charge. 400V and 800V are some of the two most common battery pack voltages used today and there exists many transistor technologies used in 400V battery packs such as Si (silicon), SiC (silicon carbide), and GaN (gallium nitrite) with devices in the ranges of 650-750V. For 800V battery packs, it may be common today to utilize SiC technology to avoid more complexity in the power electronics power stage such as multi-level, and devices used may be in the range of 1200-1700V. Even though SiC devices may have great switching performance, low resistance, and high temperature capability, the body diode forward voltage (Vf) may not be optimal. Body diode forward voltage (Vf) may be in the range of 3.5-5V, which may be much higher than a Si 650V device with Vf below 1V.

Due to the high Vf, reducing the body diode conduction may improve the system performance, improve efficiency, and decrease the transistor thermals. 800V battery packs may be used in high performance and premium vehicles due to many benefits, such as the possibility of smaller electric motors, which may allow higher power in the same volume. High voltage cables may be smaller in diameter and lighter due to lower currents in comparison to lower voltage battery packs.

Synchronous rectification may be used to improve a DC-DC converter efficiency by replacing a diode with a transistor and turning the transistor on during diode conduction. Current transients, especially with SiC transistors, occur when synchronous rectification turns on. A large voltage delta may occur because the drop across the transistor may change from Vf of body diode (DB) to current across transistor multiplied by channel on resistance (Ids x Rds_on). In a full bridge configuration, the voltage drop may be two times as large as current flows across a pair of diagonal (i.e. upper switch of a first leg and lower switch of a second leg) devices, which may include switches.

For example, in synchronous rectification, current may flow across a pair of switches (for example, M1 and M4, or M2 and M3). The voltage change, with current flowing, across the pair of transistors when devices turn on or off may be from approximately 7V to approximately 10V depending on device supplier, or 2 x Vf → Ids x Rds_on (turn on) or Ids x Rds_on → 2 x Vf (turn off).

Isolated DC-DC converters may include large oscillation during freewheeling time. Freewheeling time may include time where there is no power transfer through a transformer. Oscillation may be created by the energy transfer between the transformer leakage inductance and output capacitance of the transistors.

Isolated DC-DC converters may include lower converter efficiency due to higher power loss. For example, during converter discontinuous conduction mode, current may go to zero before the end of each switching cycle, and synchronous rectification may be turned off to prevent current from reversing direction. Only body diodes may conduct, yielding lower converter efficiency due to higher power loss.

One or more embodiments may provide a DC-DC converter that includes step activation of switches and may include two step synchronous rectification for the DC-DC converter. One or more advantages of step activation or two step synchronous rectification may include reduction of current transients when synchronous rectification turns on or off, including when SiC transistors are used as described herein. One or more advantages of step activation may include improvement in efficiency during discontinuous conduction mode, including reducing losses and improving efficiency of a DC-DC converter during discontinuous conduction mode or light load. One or more advantages of step activation may include reductions or elimination of oscillations or large oscillations during freewheeling. One or more embodiments may provide maintaining one of the FETs ON during discontinuous conduction mode or light load, which may reduce losses. One or more embodiments may provide a method that when synchronous rectification is turned OFF, typical losses are 2 x Ids x Vf. One or more embodiments may provide a method that when one of the FETs are ON, losses will be Ids x Vf + Ids² x Rds_on. One or more embodiments may provide for a 2A operating current condition, where losses may be reduced from approximately 8W to approximately 4.08W. One or more embodiments may provide maintaining one FET OFF to ensure current direction will not change. For example, one or more embodiments may include a discontinuous conduction mode that may provide maintaining one FET ON and a second FET OFF.

A current transient may occur because the voltage applied to the load is the transformer voltage minus the voltage drop across two transistors conducting current at a given time. Single-step synchronous rectification may turn on both diagonal transistors simultaneously or near-simultaneously, creating an instantaneous 2 x Vf voltage increase applied to the load, and creating a current transient. Closed loop control of the converter may decrease the transformer voltage over time to compensate for the 2 x Vf, and may regulate the commanded current. One or more embodiments may provide a reduction in the current transient by a two-step activation of diagonal transistors during synchronous rectification turn on.

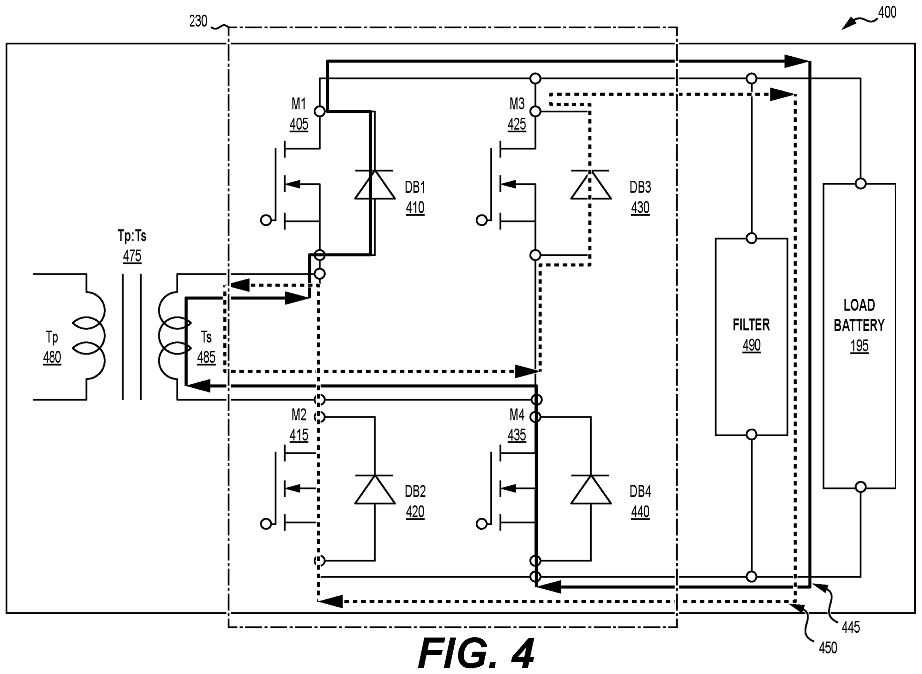

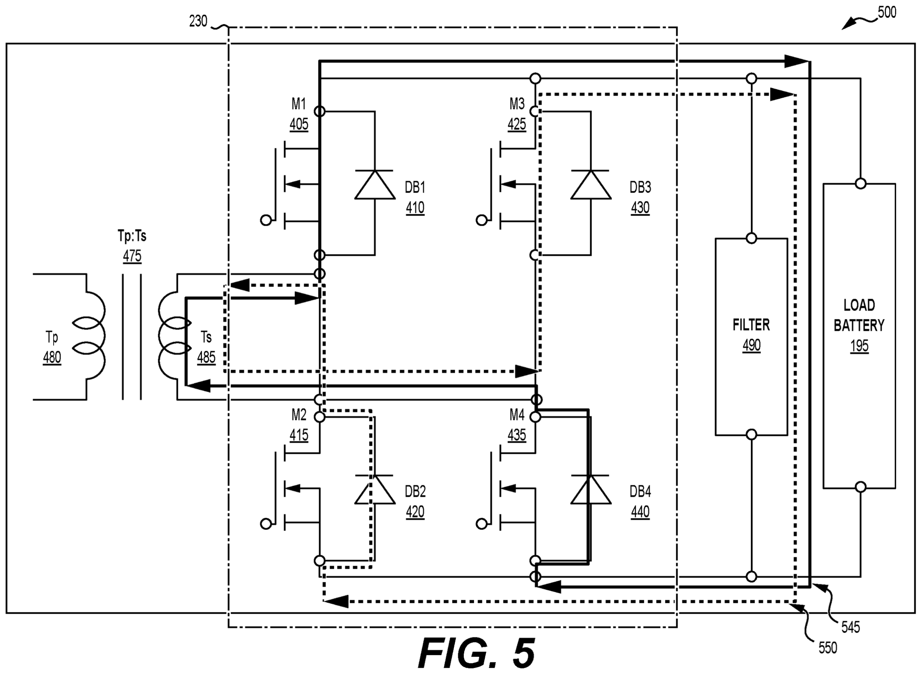

For example, a first step of the two-step activation (e.g., FIG. 4 and FIG. 5) may turn on only one of the diagonal transistors. The first step may reduce the delta voltage drop from approximately 2 x Vf to approximately 1 x Vf, and may yield about half of the current transient amplitude compared to a one-step synchronous rectification as described herein.

A second step of the two-step activation may turn on both diagonal devices in a similar operation as a single-step synchronous rectification, discontinuous conduction, light load, or standard freewheeling. One or more embodiments may provide a time delay between the two steps, such as a settling time, that may allow the control to reach a steady state regulation of the current before initiating step two. A settling time may be approximately 300 µs, for example, and may be from approximately 200 µs to approximately 400 µs.

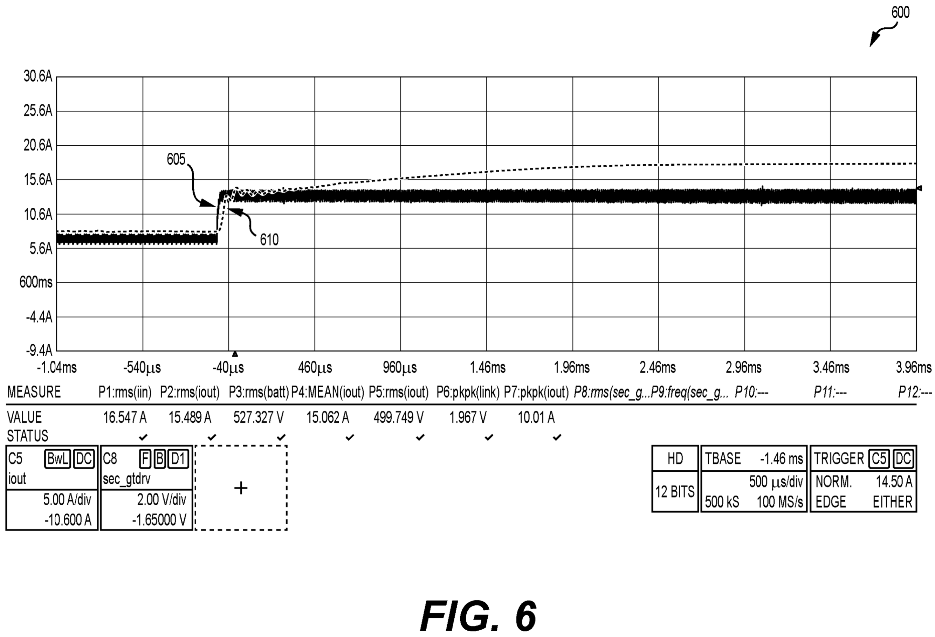

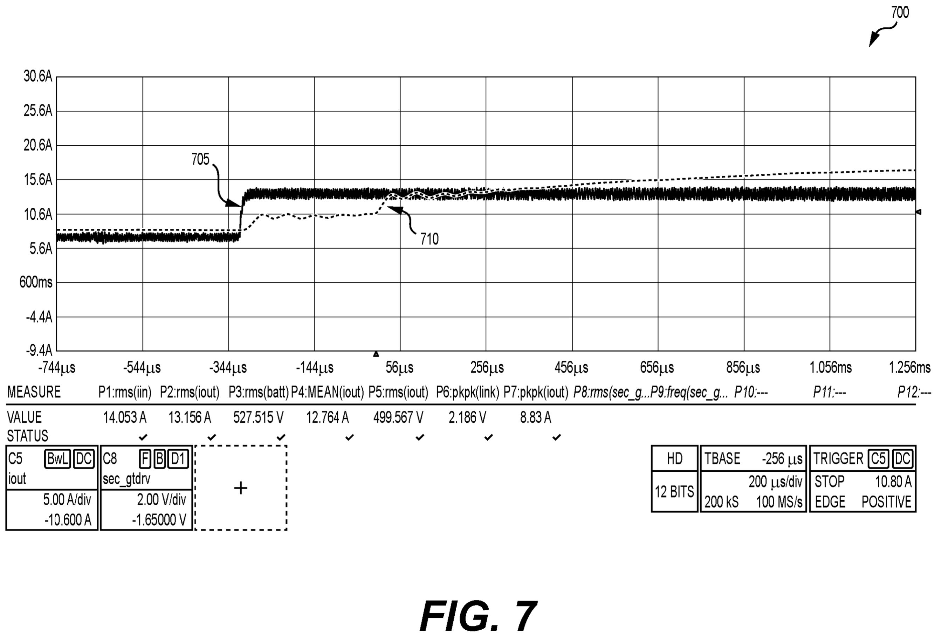

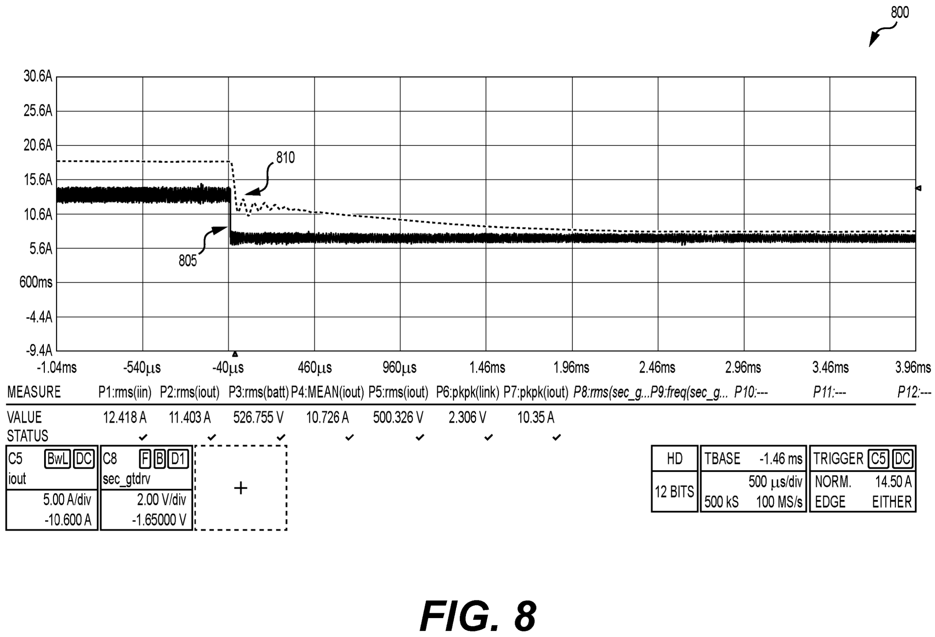

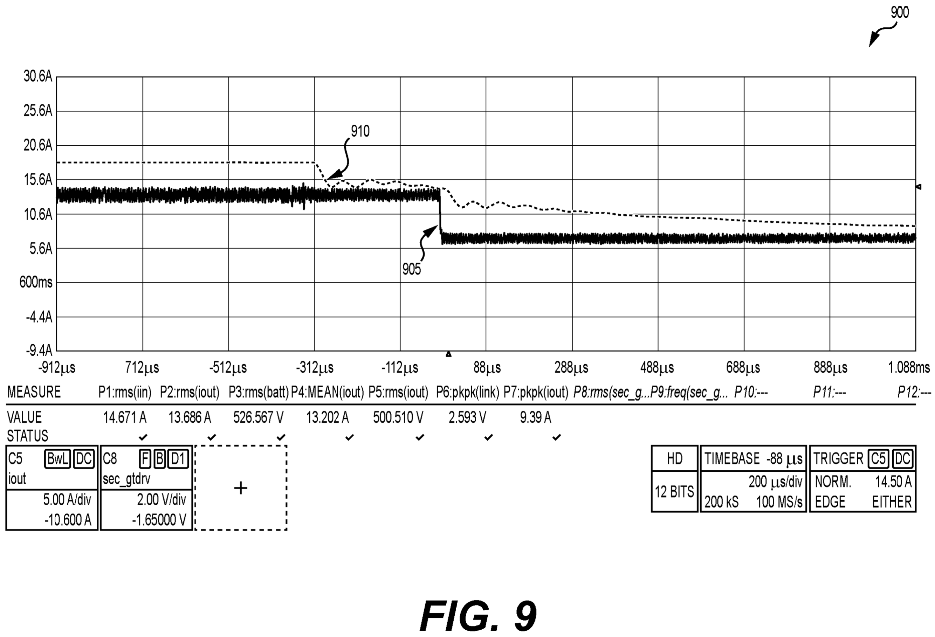

A single-step synchronous rectification may include a turn on (FIG. 6) and turn off (FIG. 8) respectively with current transient, with waveform, including waveform of approximately 8A. A two-step synchronous rectification may include a turn on (FIG. 7) and turn off (FIG. 9) respectively with current transient, with waveform, of approximately 4A per step with the settling time between two steps. The settling time may be adjusted based on control speed.

Transistor loss may be higher when synchronous rectification is off, as the body diode may perform the conduction and the power dissipation is Ids x Vf, with Ids as the current through or across the transistor. Dissipation may be higher with SiC transistor due to a higher Vf. When synchronous rectification is on, the current flow through or across the channel of the transistor and the dissipation may be Ids² x Rds_on, with Rds_on (channel on resistance) being much lower. For example if Ids=2A, Vf=4V, and Rds_on is 20mΩ, the diode loss may be approximately 8W, while the channel loss may be approximately 0.08W. In discontinuous conduction mode, synchronous rectification may be turned off as the current decreases to zero before a switching period ends, and reversal of current direction may be avoided.

Transistors may be kept off to behave as diodes to block the current direction reversal. A potential downside may be higher loss due to body diode dissipation, as described herein. One or more embodiments may provide improved efficiency, lower power loss, by operating in step one for low load currents, or in discontinuous conduction mode or light load. Total loss may be one channel loss plus one diode loss, instead of two diode loss. For example, using values described herein, a proposed loss may be approximately 4W+0.08W=4.08W, compared to two diode loss of approximately 8W.

In order to balance the loss between the two transistors over the lifetime of the devices, one or more embodiments may provide alternating the transistor state for every conduction cycle or every few conduction cycles. For example, one or more embodiments may provide turning M1 off and M4 on for a given conduction cycle. One or more embodiments may provide that the next conduction cycle M1 is on and M4 is off. This may balance the loss between the two transistors. One or more embodiments may provide alternating between the operations depicted in FIG. 4 and FIG. 5 every conduction cycle or every few conduction cycles.

One or more embodiments may provide two methods used to control a DC-DC converter, which may include frequency modulation or duty cycle modulation. Frequency modulation may operate near the maximum allowed duty cycle and control may be performed with the converter switching frequency change. Duty cycle modulation may operate at fixed switching frequency and control may be done with PWM duty cycle change. During freewheeling, power may not be transferred from source to load, and freewheeling may occur when duty cycles are less than maximum. In the case of an isolated converter, this may occur when power is not transferred from primary to secondary of a transformer.

During freewheeling, resonance between the leakage inductance of the transformer and/or parasitic inductances and the output capacitance of the transistor and/or parasitic capacitance across the bus may be created due to energy bouncing between the two energy storage components. Resonance may stop if energy is dissipated as loss in elements such as resistors or at the start of the next power cycle.

One or more embodiments may reduce or eliminate the oscillation during freewheeling by operating the synchronous rectification in step one mode as depicted in FIG. 4 and FIG. 5. Maintaining one transistor on may not allow the output capacitance of the transistor to charge and discharge as one capacitor is shorted, zero volts, and the capacitor of the other transistor in the half bridge has the bus voltage during the freewheeling. For example, FIG. 4 may depict M4 shorting its capacitor and the M3 capacitor has the bus voltage during a freewheeling period. One or more embodiments may reduce the oscillation during a freewheeling period. High frequency oscillation may create component heating, thus yielding loss system efficiency and EMC issues.

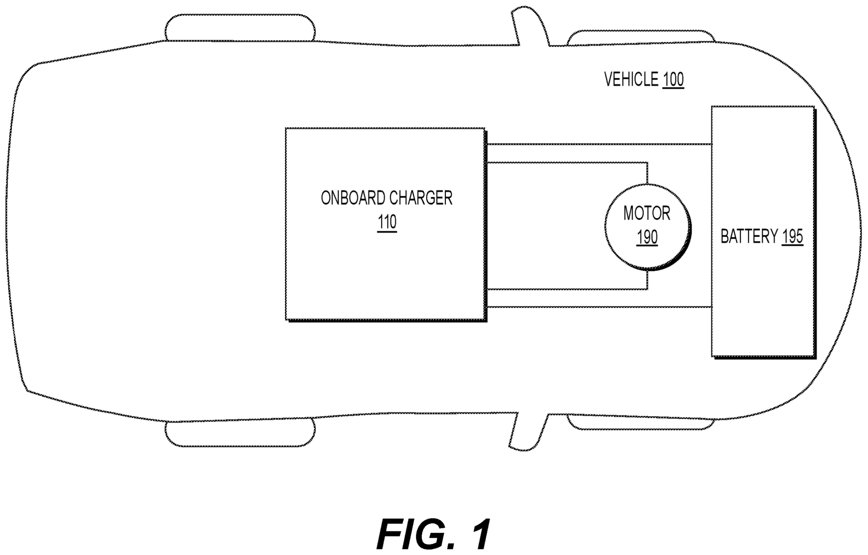

FIG. 1 depicts an exemplary system infrastructure for a vehicle including an onboard charger, according to one or more embodiments. In the context of this disclosure, the on-board charger may include a combined inverter and converter, and the combined inverter and converter may be referred to as an inverter. The onboard charger is merely an example embodiment, and the disclosure is not limited thereto. For example, the disclosure may include any power converter with a DC-DC converter. As shown in FIG. 1, electric vehicle 100 may include a battery charger 110, a motor 190, and a battery pack or load battery 195. The battery charger 110 may include components to receive electrical power from an external source and output electrical power to charge battery pack or load battery 195 of electric vehicle 100. The battery charger 110 may convert DC power from battery pack or load battery 195 in electric vehicle 100 to AC power, to drive motor 190 of the electric vehicle 100, for example, but the embodiments are not limited thereto. The battery charger 110 may be bidirectional, and may convert DC power to AC power, or convert AC power to DC power, such as during regenerative braking, for example. Battery charger 110 may be a single-phase inverter or a multi-phase inverter.

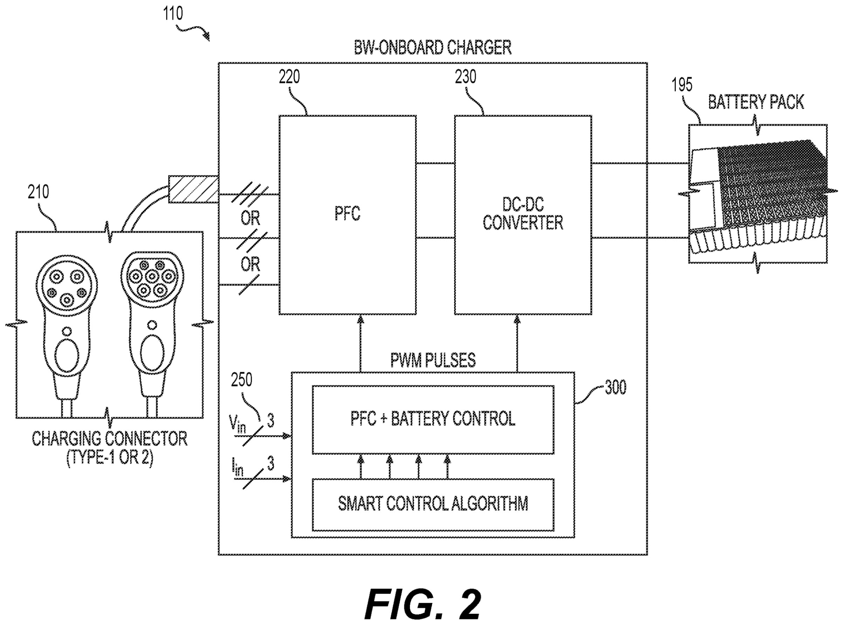

FIG. 2 depicts an exemplary system infrastructure for a battery charger, according to one or more embodiments. As depicted in FIG. 2, a battery charger 110 may include or be electrically connectable to a charging connector 210. The charging connector 210 may provide an electrical connection from an external power supply to the battery charger 110, and may be a Type 1 or a Type 2 connector, for example. The charging connector 210 may transfer single phase, two-phase, or three-phase power.

The battery charger 110 may include a PFC subsystem 220, a DC-DC converter 230, and a controller 300 receiving signals from input sensor 250. The battery charger 110 may include or be electrically connectable to a battery pack or load battery 195. The battery charger 110 may be used in automotive vehicles as an onboard charger to transfer power from an external power source through charging connector 210 to battery pack or load battery 195, or to transfer power from battery pack or load battery 195 in a vehicle to grid operation. The battery charger 110 may be included in a system provided as an electric vehicle 100 including a motor 190 configured to rotate based on power received from the battery pack or load battery 195.

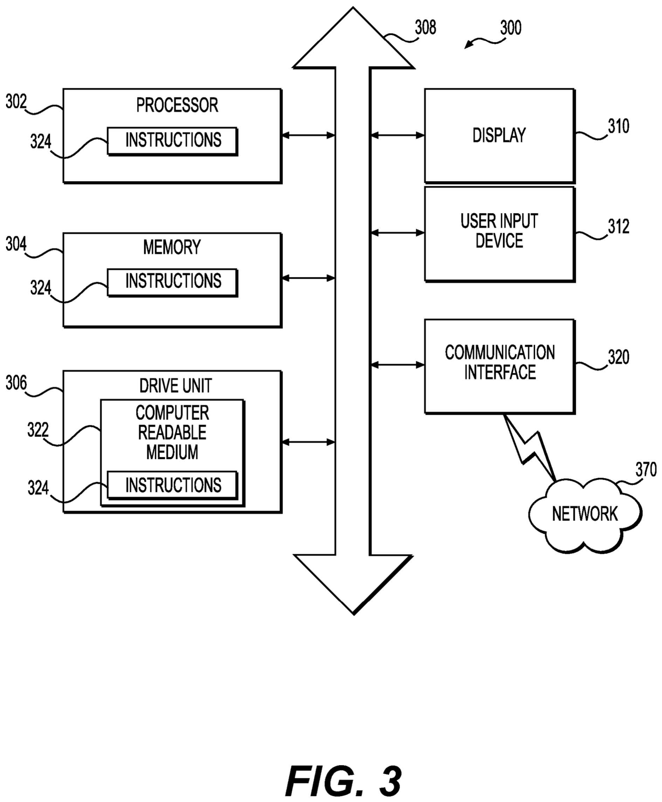

FIG. 3 depicts an implementation of a computer system that may execute techniques presented herein, according to one or more embodiments. Any suitable system infrastructure may be put into place to allow control of the battery charger. FIG. 3 and the following discussion provide a brief, general description of a suitable computing environment in which the present disclosure may be implemented. In one embodiment, any of the disclosed systems, methods, and/or graphical user interfaces may be executed by or implemented by a computing system consistent with or similar to that depicted in FIG. 3. Although not required, aspects of the present disclosure are described in the context of computer-executable instructions, such as routines executed by a data processing device, e.g., a server computer, wireless device, and/or personal computer. Those skilled in the relevant art will appreciate that aspects of the present disclosure can be practiced with other communications, data processing, or computer system configurations, including: Internet appliances, hand-held devices (including personal digital assistants ("PDAs")), wearable computers, all manner of cellular or mobile phones (including Voice over IP ("VoIP") phones), dumb terminals, media players, gaming devices, virtual reality devices, multi-processor systems, microprocessor-based or programmable consumer electronics, set-top boxes, network PCs, mini-computers, mainframe computers, and the like. Indeed, the terms "computer," "server," and the like, are generally used interchangeably herein, and refer to any of the above devices and systems, as well as any data processor.

Aspects of the present disclosure may be embodied in a special purpose computer and/or data processor that is specifically programmed, configured, and/or constructed to perform one or more of the computer-executable instructions explained in detail herein. While aspects of the present disclosure, such as certain functions, are described as being performed exclusively on a single device, the present disclosure may also be practiced in distributed environments where functions or modules are shared among disparate processing devices, which are linked through a communications network, such as a Local Area Network ("LAN"), Wide Area Network ("WAN"), and/or the Internet. Similarly, techniques presented herein as involving multiple devices may be implemented in a single device. In a distributed computing environment, program modules may be located in both local and/or remote memory storage devices.

Aspects of the present disclosure may be stored and/or distributed on non-transitory computer-readable media, including magnetically or optically readable computer discs, hard-wired or preprogrammed chips (e.g., EEPROM semiconductor chips), nanotechnology memory, biological memory, or other data storage media. Alternatively, computer implemented instructions, data structures, screen displays, and other data under aspects of the present disclosure may be distributed over the Internet and/or over other networks (including wireless networks), on a propagated signal on a propagation medium (e.g., an electromagnetic wave(s), a sound wave, etc.) over a period of time, and/or they may be provided on any analog or digital network (packet switched, circuit switched, or other scheme).

The controller 300 may include a set of instructions that can be executed to cause the controller 300 to perform any one or more of the methods or computer-based functions disclosed herein. The controller 300 may operate as a standalone device or may be connected, e.g., using a network, to other computer systems or peripheral devices.

In a networked deployment, the controller 300 may operate in the capacity of a server or as a client in a server-client user network environment, or as a peer computer system in a peer-to-peer (or distributed) network environment. The controller 300 can also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular implementation, the controller 300 can be implemented using electronic devices that provide voice, video, or data communication. Further, while the controller 300 is illustrated as a single system, the term "system" shall also be taken to include any collection of systems or sub-systems that individually or jointly execute a set, or multiple sets, of instructions to perform one or more computer functions.

As illustrated in FIG. 3, the controller 300 may include a processor 302, e.g., a central processing unit (CPU), a graphics processing unit (GPU), or both. The processor 302 may be a component in a variety of systems. For example, the processor 302 may be part of a standard computer. The processor 302 may be one or more general processors, digital signal processors, application specific integrated circuits, field programmable gate arrays, servers, networks, digital circuits, analog circuits, combinations thereof, or other now known or later developed devices for analyzing and processing data. The processor 302 may implement a software program, such as code generated manually (i.e., programmed).

The controller 300 may include a memory 304 that can communicate via a bus 308. The memory 304 may be a main memory, a static memory, or a dynamic memory. The memory 304 may include, but is not limited to computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one implementation, the memory 304 includes a cache or random-access memory for the processor 302. In alternative implementations, the memory 304 is separate from the processor 302, such as a cache memory of a processor, the system memory, or other memory. The memory 304 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 304 is operable to store instructions executable by the processor 302. The functions, acts or tasks illustrated in the figures or described herein may be performed by the processor 302 executing the instructions stored in the memory 304. The functions, acts or tasks are independent of the particular type of instructions set, storage media, processor or processing strategy and may be performed by software, hardware, integrated circuits, firm-ware, micro-code and the like, operating alone or in combination. Likewise, processing strategies may include multiprocessing, multitasking, parallel processing and the like.

As shown, the controller 300 may further include a display 310, such as a liquid crystal display (LCD), an organic light emitting diode (OLED), a flat panel display, a solid-state display, a cathode ray tube (CRT), a projector, a printer or other now known or later developed display device for outputting determined information. The display 310 may act as an interface for the user to see the functioning of the processor 302, or specifically as an interface with the software stored in the memory 304 or in the drive unit 306.

Additionally or alternatively, the controller 300 may include an input device 312 configured to allow a user to interact with any of the components of controller 300. The input device 312 may be a number pad, a keyboard, or a cursor control device, such as a mouse, or a joystick, touch screen display, remote control, or any other device operative to interact with the controller 300.

The controller 300 may also or alternatively include drive unit 306 implemented as a disk or optical drive. The drive unit 306 may include a computer-readable medium 322 in which one or more sets of instructions 324, e.g. software, can be embedded. Further, the instructions 324 may embody one or more of the methods or logic as described herein. The instructions 324 may reside completely or partially within the memory 304 and/or within the processor 302 during execution by the controller 300. The memory 304 and the processor 302 also may include computer-readable media as discussed above.

In some systems, a computer-readable medium 322 includes instructions 324 or receives and executes instructions 324 responsive to a propagated signal so that a device connected to a network 370 can communicate voice, video, audio, images, or any other data over the network 370. Further, the instructions 324 may be transmitted or received over the network 370 via a communication port or interface 320, and/or using a bus 308. The communication port or interface 320 may be a part of the processor 302 or may be a separate component. The communication port or interface 320 may be created in software or may be a physical connection in hardware. The communication port or interface 320 may be configured to connect with a network 370, external media, the display 310, or any other components in controller 300, or combinations thereof. The connection with the network 370 may be a physical connection, such as a wired Ethernet connection or may be established wirelessly as discussed below. Likewise, the additional connections with other components of the controller 300 may be physical connections or may be established wirelessly. The network 370 may alternatively be directly connected to a bus 308.

While the computer-readable medium 322 is shown to be a single medium, the term "computer-readable medium" may include a single medium or multiple media, such as a centralized or distributed database, and/or associated caches and servers that store one or more sets of instructions. The term "computer-readable medium" may also include any medium that is capable of storing, encoding, or carrying a set of instructions for execution by a processor or that cause a computer system to perform any one or more of the methods or operations disclosed herein. The computer-readable medium 322 may be non-transitory, and may be tangible.

The computer-readable medium 322 can include a solid-state memory such as a memory card or other package that houses one or more non-volatile read-only memories. The computer-readable medium 322 can be a random-access memory or other volatile re-writable memory. Additionally or alternatively, the computer-readable medium 322 can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative implementation, dedicated hardware implementations, such as application specific integrated circuits, programmable logic arrays and other hardware devices, can be constructed to implement one or more of the methods described herein. Applications that may include the apparatus and systems of various implementations can broadly include a variety of electronic and computer systems. One or more implementations described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

The controller 300 may be connected to a network 370. The network 370 may define one or more networks including wired or wireless networks. The wireless network may be a cellular telephone network, an 802.11, 802.16, 802.20, or WiMAX network. Further, such networks may include a public network, such as the Internet, a private network, such as an intranet, or combinations thereof, and may utilize a variety of networking protocols now available or later developed including, but not limited to TCP/IP based networking protocols. The network 370 may include wide area networks (WAN), such as the Internet, local area networks (LAN), campus area networks, metropolitan area networks, a direct connection such as through a Universal Serial Bus (USB) port, or any other networks that may allow for data communication. The network 370 may be configured to couple one computing device to another computing device to enable communication of data between the devices. The network 370 may generally be enabled to employ any form of machine-readable media for communicating information from one device to another. The network 370 may include communication methods by which information may travel between computing devices. The network 370 may be divided into sub-networks. The sub-networks may allow access to all of the other components connected thereto or the sub-networks may restrict access between the components. The network 370 may be regarded as a public or private network connection and may include, for example, a virtual private network or an encryption or other security mechanism employed over the public Internet, or the like.

In accordance with various implementations of the present disclosure, the methods described herein may be implemented by software programs executable by a computer system. Further, in an exemplary, non-limited implementation, implementations can include distributed processing, component/object distributed processing, and parallel processing. Alternatively, virtual computer system processing can be constructed to implement one or more of the methods or functionality as described herein.

Although the present specification describes components and functions that may be implemented in particular implementations with reference to particular standards and protocols, the disclosure is not limited to such standards and protocols. For example, standards for Internet and other packet switched network transmission (e.g., TCP/IP, UDP/IP, HTML, HTTP) represent examples of the state of the art. Such standards are periodically superseded by faster or more efficient equivalents having essentially the same functions. Accordingly, replacement standards and protocols having the same or similar functions as those disclosed herein are considered equivalents thereof.

It will be understood that the steps of methods discussed are performed in one embodiment by an appropriate processor (or processors) of a processing (i.e., computer) system executing instructions (computer-readable code) stored in storage. It will also be understood that the disclosure is not limited to any particular implementation or programming technique and that the disclosure may be implemented using any appropriate techniques for implementing the functionality described herein. The disclosure is not limited to any particular programming language or operating system.

FIG. 4 depicts a first step with an upper switch open in one or more of a two-step synchronous rectification of the DC-DC converter, a discontinuous conduction or light load of the DC-DC converter, or a freewheeling of the DC-DC converter, according to one or more embodiments. As depicted in FIG. 4, system 400 may include DC-DC converter 230, transformer 475, filter 490, and load battery 195. DC-DC converter 230 may include switch 405 (M1), diode 410 (DB1), switch 415 (M2), diode 420 (DB2), switch 425 (M3), diode 430 (DB3), switch 435 (M4), and diode 440 (DB4). Transformer 475 may include primary winding 480 (Tp) and secondary winding 485 (Ts). Switch 405 may be an upper switch of a first leg of DC-DC converter 230, and may be diagonal with respect to switch 435, which may be a lower switch of a second leg of DC-DC converter 230. Similarly, switch 415 may be diagonal with respect to switch 425.

DC-DC converter 230 may electrically connect to transformer 475. Transformer 475 may include a secondary side which may include secondary winding 485 and may include a primary side which may include a primary winding 480. Secondary winding 485 may be electrically connected to DC-DC converter 230. DC-DC converter 230 may be electrically connected to filter 490 and load battery 195.

DC-DC converter 230 may provide bidirectional current, including equal or near-equal positive and negative half cycles. In single-step synchronous rectification, positive current may leave secondary winding 485 and follow a path through switch 405, through load battery 195, through switch 435, then back to secondary winding 485, where switch 405 and switch 435 are turned on at the same time or functionally the same time and conduct current. Functionally, the same time may include a value that is significantly less than a settling time (for example, a settling time which may include 300 µs), such as 0 µs or 1 µs. Synchronous rectification may also include a negative half step current path, in addition to a positive half step current path.

For a positive cycle for a first step of two step synchronous rectification, as depicted in FIG. 4, switch 435 may be turned on (before switch 405 is turned on in a second step), and current may flow along path 445 through switch 435, through secondary winding 485, through diode 410, and through load battery 195. For example, a controller (e.g., controller 300) may be configured to hold switch 435 on, and hold switch 405 to remain turned off. For a negative cycle, switch 415 may be turned on (before switch 425 is turned on in a second step), and current may flow along path 450 through switch 415, through secondary winding 485, through diode 430, and through load battery 195. For example, a controller (e.g., controller 300) may be configured to hold switch 415 on, and hold switch 425 to remain off. Current may flow through the diodes (e.g., diode 410, diode 430), so that even when switches are turned off, conduction will occur.

One or more controllers (e.g., controller 300) may be configured to turn on switch 435 and hold switch 405 to remain off, and may turn on switch 415 and hold switch 425 to remain off, during one or more of a synchronous rectification of the DC-DC converter 230, a discontinuous conduction or light load of the DC-DC converter 230, or a freewheeling of the DC-DC converter 230.

One or more controllers (e.g., controller 300) may be configured to operate in a first period to turn off the switch 435 and hold the switch 405 to remain turned on, and to turn off switch 415 and hold switch 425 to remain turned on during a shutdown period for one or more of a synchronous rectification of the DC-DC converter, a discontinuous conduction or light load of the DC-DC converter, or a freewheeling of the DC-DC converter. Switch 405, switch 415, switch 425, and switch 435 may be referred to as a first switch, a second switch, a third switch, and a fourth switch, respectively. As depicted in FIG. 4 and FIG. 5, the specific on/off configurations may be alternated, and switch 415, switch 405, switch 435, and switch 425 may be referred to as a first switch, a second switch, a third switch, and a fourth switch, respectively.

A second step of two step synchronous rectification may include turning on a second diagonal switch (e.g., switch 405, switch 425) after a period of time (which may include a settling time such as, for example, approximately 300 µs, or, for example, a settling time in the range from approximately 200 µs to approximately 400 µs) predetermined by a user or system, determined by a controller (e.g., controller 300), or determined by a control loop. After a period of time which may include a settling time, switch 405 may be turned on. After a period of time which may include a settling time, switch 425 may be turned on. A resulting current after a first step of the two-step synchronous rectification and second step of the two-step synchronous rectification may include a decrease in the amplitude of current transients, and other advantages described herein.

FIG. 5 depicts a first state with a lower switch open in one or more of a synchronous rectification of the DC-DC converter, a discontinuous conduction or light load of the DC-DC converter, or a freewheeling of the DC-DC converter, according to one or more embodiments. As depicted in FIG. 5, the system 500 may include DC-DC converter 230, transformer 475, filter 490, and load battery 195.

DC-DC converter 230 may provide bidirectional current, including equal or mostly-equal positive and negative half cycles. For a positive cycle for a first step of two step synchronous rectification, as depicted in FIG. 5, switch 405 may be turned on (before switch 435 is turned on in a second step), and current may flow along path 545 through secondary winding 485, switch 405, through load battery 195, and through diode 440. For a negative cycle, switch 425 may be turned on (before switch 415 is turned on in a second step), and current may flow along path 550 through secondary winding 485, switch 425, through load battery 195, and through diode 420. Current may flow through the diodes (e.g., diode 420, diode 440), so that even when switches are turned off, conduction will occur.

A second step of two step synchronous rectification may include turning on a second diagonal switch after a period of time (which may include a settling time such as, for example, approximately 300 µs, or, for example, a settling time in the range of approximately 200 µs to approximately 400 µs) predetermined by a user or system, determined by a controller, or determined by a control loop. After a period of time which may include a settling time, switch 435 may be turned on. After a period of time which may include a settling time, switch 415 may be turned on. A resulting current after a first and second step may include a decrease in the amplitude of current transients, and other advantages described herein.

The advantages described herein may apply whether first step occurs as depicted in FIG. 4 or FIG. 5. Alternating the first step as depicted in FIG. 4 or FIG. 5 may provide more even wear of components in a system, which may include switches. Alternating between the implementation of system 400 as depicted in FIG. 4 and system 500 as depicted in FIG. 5 may reduce individual degradation of switches over the lifetime of a system or product with step activation or two step synchronous rectification. Two step synchronous rectification or step activation as implemented by system 400 or system 500 may include reduction of current transients when synchronous rectification is enabled, improved efficiency when a converter is operating in discontinuous conduction mode or light load, and reduced oscillations during freewheeling mode.

FIG. 6 depicts a plot of a current transient after turning on with single step synchronous rectification, according to one or more embodiments. Plot 600 may include signal 605 and current transient 610. Turning ON of synchronous rectification with single step synchronous rectification (i.e. without two step synchronous rectification) may result in a current spike as seen in current transient 610 from approximately 8A to approximately 14A and then a ramp to approximately 18A in a single step change.

FIG. 7 depicts a plot of a current transient after turning on with two step synchronous rectification or step activation, according to one or more embodiments. Plot 700 may include signal 705 and current transient 710. Turning ON of synchronous rectification with step activation method, which may include system 400 or system 500, and with a current delay of approximately 300 us, may result in current step as depicted in current transient 710 from approximately 8A to approximately 11A in a first step, from approximately 11A to approximately 14A in a second step, and then a ramp to approximately 18A, which may allow a controller to respond and modify the operating conditions to ensure the output current is at a commanded level. The current transient 710 resulting from two step synchronous rectification may be more manageable than, for example, current transient 610 resulting from single step synchronous rectification.

FIG. 8 depicts a plot of a current transient after turning off with single step synchronous rectification, according to one or more embodiments. Plot 800 may include signal 805 and current transient 810. Single step synchronous rectification may not include two step synchronous rectification. During single step synchronous rectification without step activation method or without two step synchronous rectification, turning OFF the synchronous rectification may result in current spike or current transient 810 from approximately 18A to approximately 10A and then a ramp to approximately 8A in a single step change.

FIG. 9 depicts a plot of a current transient after turning off with two step synchronous rectification or step activation, according to one or more embodiments. Plot 900 may include signal 905 and current transient 910. Turning OFF the synchronous rectification with step activation method or two step synchronous rectification, which may include system 400 or system 500, and with a current delay of approximately 300 us, may result in current step as depicted in current transient910 from approximately 18A to approximately 14A on first step, from approximately 14A to approximately 10A on the second step, and then a ramp to approximately 8A , which may allow a controller to respond and modify the operating conditions to ensure the output current is at a commanded level. The current transient resulting from two step synchronous rectification may be more manageable and controllable than, for example, current transient 810 resulting from single step synchronous rectification.

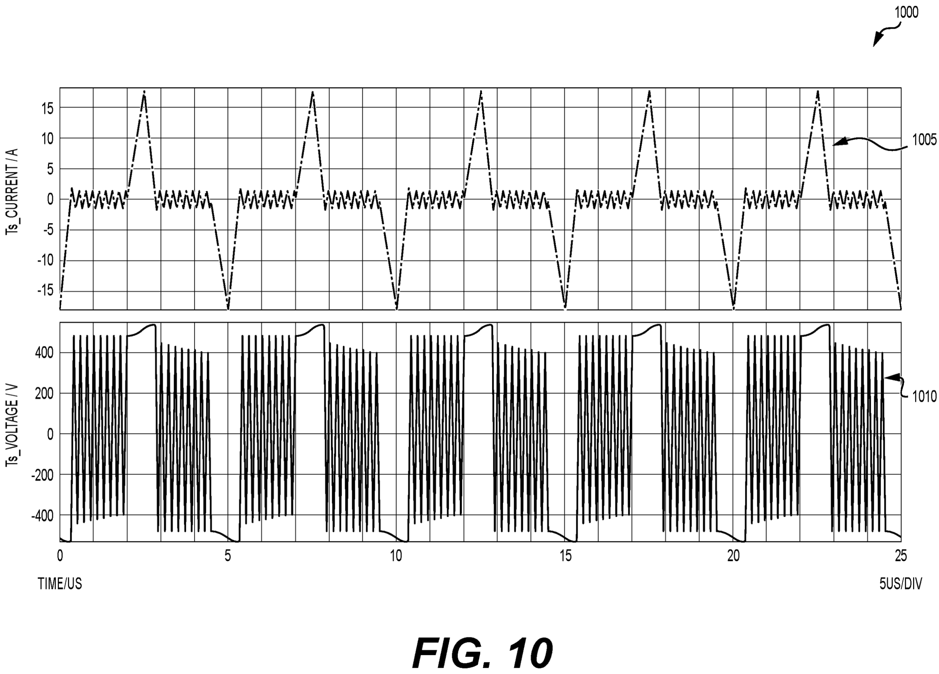

FIG. 10 depicts a plot of transformer secondary current and voltage oscillation during freewheeling, according to one or more embodiments. Transformer secondary plots 1000 may include graph 1005 and graph 1010. Graph 1005 may include a transformer secondary current (e.g., through secondary winding 485), and graph 1010 may include a transformer secondary voltage (e.g., at secondary winding 485). FIG. 10 may depict transformer secondary plots 1000 where two step synchronous rectification is not present. Ringing may be observed in the transformer secondary voltage as depicted in graph 1005 during freewheeling time where the energy is being exchanged between transformer leakage inductance and MOSFET capacitance. Ringing may be reduced when the energy is dissipated through the resistors in the circuit or next switching cycle. FIG. 10 may depict the ringing or oscillation during freewheeling stopped by the start of a power cycle, where graph 1005 may be the transformer secondary stage and graph 1010 may be the transformer secondary current.

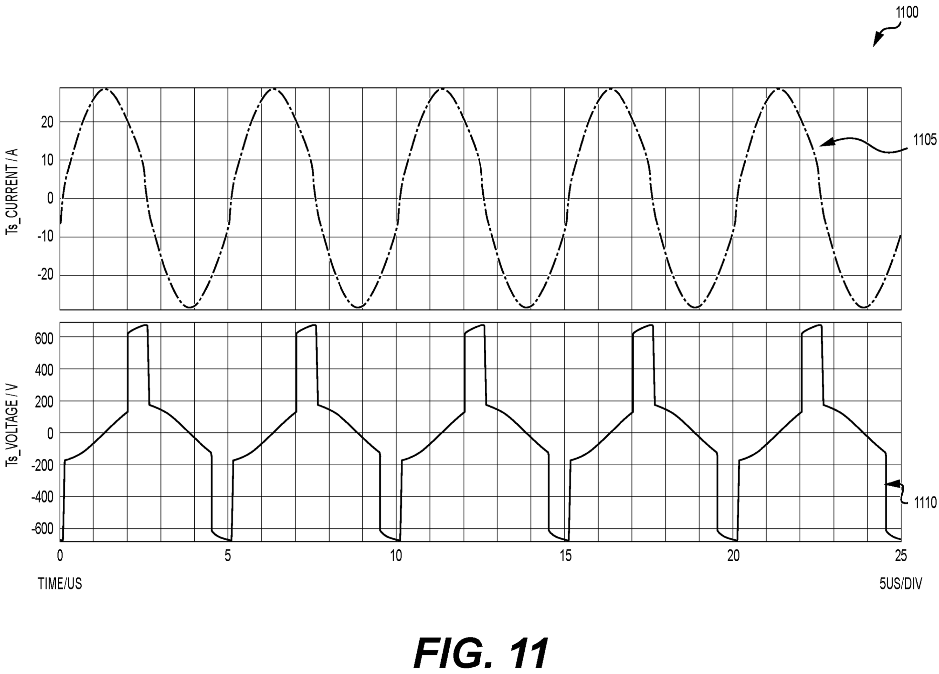

FIG. 11 depicts a plot of transformer secondary current and voltage with step activation and without oscillation during freewheeling, according to one or more embodiments. Transformer secondary plots 1100 may include graph 1105 and graph 1110. Graph 1105 may include a transformer secondary current (e.g., through secondary winding 485), and graph 1110 may include a transformer secondary voltage (e.g., at secondary winding 485). FIG. 11 may depict transformer secondary plots 1100 where two step synchronous rectification or step activation method is present. Ringing may be reduced or may be eliminated in the transformer secondary voltage during freewheeling time by maintaining one of the FETs ON during freewheeling, which will change the circuit elements that are resonating. Maintaining the FET ON may force the bus voltage across the other capacitor of the half bridge and may avoid ringing due to energy exchange between capacitance and transformer inductance.

One or more embodiments may provide improved efficiency, lower power loss, by operating in step one for low/light load currents, or in discontinuous conduction mode. One or more embodiments may provide total loss may be one channel loss plus one diode loss instead of two diode loss. One or more embodiments may provide balance of the loss between the two transistors, and one or more embodiments may provide alternating the transistor state for every conduction cycle or every few conduction cycles. One or more embodiments may provide balance of the loss between two transistors of a system. One or more embodiments may provide alternating between the operations every conduction cycle or every few conduction cycles.

One or more embodiments may provide two methods used to control a DC-DC converter, which may include frequency modulation or duty cycle modulation. One or more embodiments may provide the ringing or oscillation during freewheeling stopped by the start of a power cycle. One or more embodiments may reduce or eliminate the oscillation during freewheeling by operating the synchronous rectification in step one mode. One or more embodiments may reduce the oscillation during a freewheeling period, and may provide reduction of high frequency oscillation.

Other embodiments of the disclosure will be apparent to those skilled in the art from consideration of the specification and practice of the invention disclosed herein. It is intended that the specification and examples be considered as exemplary only, with a true scope of the invention being indicated by the following claims.

## Claims

1. A DC-DC converter comprising:
a first switch, and a first diode in parallel with the first switch;
a second switch, and a second diode in parallel with the second switch;
a third switch, and a third diode in parallel with the third switch;
a fourth switch, and a fourth diode in parallel with the fourth switch; and
one or more controllers configured to operate in a first period to turn on the first switch and hold the fourth switch to remain turned off, and to turn on the third switch and hold the second switch to remain turned off during one or more of a synchronous rectification of the DC-DC converter, a discontinuous conduction or light load of the DC-DC converter, or a freewheeling of the DC-DC converter.

2. The DC-DC converter of claim 1, wherein the one or more controllers are further configured to turn on the second switch and the fourth switch in the first period after a settling time during the synchronous rectification of the DC-DC converter.

3. The DC-DC converter of any one of claims 1 to 2, wherein the one or more controllers are configured to operate in the first period to turn on the first switch and hold the fourth switch to remain turned off, and to turn on the third switch and hold the second switch to remain turned off during one or more of the discontinuous conduction or light load of the DC-DC converter or the freewheeling of the DC-DC converter.

4. The DC-DC converter of any one of claims 1 to 3, wherein the one or more controllers are further configured to operate in a second period to turn on the fourth switch and hold the first switch to remain turned off, and to turn on the second switch and hold the third switch to remain turned off.

5. The DC-DC converter of any one of claims 1 to 4, wherein the first period includes more than one conduction cycle.

6. The DC-DC converter of any one of claims 1 to 5, wherein the one or more controllers are further configured to operate in the first period to turn off the first switch and hold the fourth switch to remain turned on, and to turn off the third switch and hold the second switch to remain turned on during a shutdown period for one or more of the synchronous rectification of the DC-DC converter, the discontinuous conduction or light load of the DC-DC converter, or the freewheeling of the DC-DC converter; and wherein, preferably, the one or more controllers are further configured to turn off the second switch and the fourth switch in the first period after a settling time;
and/or
wherein the one or more controllers are further configured to operate in the first period to turn off the fourth switch and hold the first switch to remain turned on, and to turn off the second switch and hold the third switch to remain turned on during a shutdown period for one or more of the synchronous rectification of the DC-DC converter, the discontinuous conduction or light load of the DC-DC converter, or the freewheeling of the DC-DC converter.

7. The DC-DC converter of any one of claims 1 to 6, wherein a resistance of the first diode is higher than an on-state resistance of the first switch.

8. The DC-DC converter of any one of claims 1 to 7, further comprising:
an inverter including the DC-DC converter, the inverter configured to convert DC power from a battery to AC power to drive a motor,
the battery configured to supply the DC power to the inverter; and
the motor configured to receive the AC power from the inverter to drive the motor,
wherein the inverter, the battery, and the motor are provided as a vehicle.

9. A system including one or more controllers configured to operate in a first period to turn on a first switch of a full bridge DC-DC converter and hold a fourth switch of the full bridge DC-DC converter to remain turned off, and to turn on a third switch of the full bridge DC-DC converter and hold a second switch of the full bridge DC-DC converter to remain turned off.

10. The system of claim 9, wherein the one or more controllers are further configured to turn on the second switch and the fourth switch in the first period after a settling time during a synchronous rectification of the full bridge DC-DC converter; and
wherein, preferably, the one or more controllers are further configured to adjust the settling time.

11. The system of claim 9 or 10, wherein the one or more controllers are further configured to operate in a second period to turn on the fourth switch and hold the first switch to remain turned off, and to turn on the second switch and hold the third switch to remain turned off.

12. A method comprising:
operating a first switch in a full bridge DC-DC converter and a third switch of the full bridge DC-DC converter to turn on at a first time in a first period; and
operating a second switch of the full bridge DC-DC converter and a fourth switch of the full bridge DC-DC converter to remain off.

13. The method of claim 12, further comprising:
operating the second switch of the full bridge DC-DC converter and the fourth switch of the full bridge DC-DC converter to turn on at a second time in the first period after the first time in the first period; wherein, preferably, the second time in the first period follows a settling time of a current transient of the full bridge DC-DC converter caused by operating the first switch and the third switch to turn on;
and/or further comprising:
operating the second switch and the fourth switch to turn on, and the first switch and the third switch to remain off, at a first time in a second period; and
operating the first switch and the third switch to turn on at a second time in the second period after the first time in the second period.

14. The method of any one of claims 12 to 13, wherein the first period includes more than one conduction cycle.

15. The method of any one of claims 12 to 14, wherein the method is performed during one or more of a synchronous rectification of the full bridge DC-DC converter, a discontinuous conduction or light load of the full bridge DC-DC converter, or a freewheeling of the full bridge DC-DC converter.
